# EUROPEAN PATENT APPLICATION

(11) **EP 1 775 209 A2**
(43) Date of publication of application: **18.04.2007**
(21) Application number: 06255302.9
(22) Date of filing: 16.10.2006
(51) Int. Cl.: B62K 21/08, F16F 9/16

(54) **Straddle-type vehicle with a steering damper**

(30) Priority: 17.10.2005 JP 2005302288
(71) Applicant: YAMAHA HATSUDOKI KABUSHIKI KAISHA, Iwata-shi, Shizuoka 438-8501 (JP)
(72) Inventor: Ito, Norimasa c/o Yamaha Hatsudoki K.K., Iwata-shi Shizuoka-ken 438-8501 (JP)
(74) Representative: Harris, Ian Richard

(57) **Abstract**

The layout design of vehicle components around a steering damper and and a reduction in the cost of manufacturing the steering damper is achieved by steering damper (100) that includes a piston cylinder (101) extending axially in a straight line; a piston (102) slidably disposed in the piston cylinder (101); a first piston rod (103) extending in a straight line from one end face (102A) of the piston (102); and a second piston rod (104) extending in a straight line from the other end face (102B) of the piston (102). The leading ends of the first and second piston rods (103) and (104) can be mounted to first and second brackets (18) and (19), respectively, of the under bracket (16). The piston cylinder (101) and a damper mounting frame (12A) can be joined together with a link (105).

## Description

### BACKGROUND

The present invention relates to a straddle-type vehicle, for example a motorcycle, and a steering damper for use in the same.

Riders of motorcycles sometimes feel uncomfortable or cannot steer smoothly during driving when vibrations from a road or the like are applied to the steering. Accordingly, to reduce the vibrations, some motorcycles are equipped with a steering damper for improving steering operability, for example, between the body frame and an under bracket of the steering.

However, with this conventional technique, when the steering angle becomes large, an end of a piston rod projects greatly from a piston cylinder. To prevent the interference between the large projection of the piston rod and the components of the vehicle body such as a cowling for covering the vehicle body, a large space is needed around the steering damper. This makes it difficult to design the layout of the vehicle components disposed around the steering damper.

To solve the problem, a motorcycle is proposed in JP-UM-A-1-175494 wherein the interference between the large projection of one end of the piston rod from the tube and the vehicle components can be prevented by the curved structure of the steering damper.

However, the motorcycle disclosed in JP-UM-A-1-175494 is constructed such that the steering damper is curved in an arc shape. This means that it is necessary to curve the steering damper by pressing or the like at manufacture. This poses the problem of increasing the man-hours required, resulting in high manufacturing cost.

In the light of the above, it is desirable to provide a straddle-type vehicle in which the layout of the components of the vehicle around a steering damper can easily be designed and the steering damper can be manufactured at reduced man-hour and cost, and to provide a steering damper for use in the same.

### SUMMARY

Aspects of the invention are defined in the appended claims.

An example of a straddle type vehicle in accordance with the invention can include: a body frame; an under bracket mounted to a steering shaft supported by the body frame; and a steering damper that causes attenuation during steering. An example of the steering damper can include: a piston cylinder mountable to the body frame; a piston slidably disposed in the piston cylinder and causing attenuation during sliding in the piston cylinder; a first piston rod projecting from one end face of the piston to the outside of the piston cylinder, the projecting end being such that it can be fixed to a longitudinal end of the under bracket of the body; and a second piston rod projecting from the other end face of the piston to the outside of the piston cylinder, such that the projecting end can be fixed to the other longitudinal end of the under bracket of the body. The projection of the first piston rod and the projection of the second piston rod are in a line.

This arrangement prevents the change of the positional relationship between the steering damper and the under bracket even when the steering is turned. This enables the steering load to be directed on the tangential line of the steering circle when the steering is turned. Therefore, the steering load is not changed according to the steering angle, allowing stable steering operation. The under bracket can be a steering bracket at a lower end of the steering shaft.

When the steering is turned in one direction, the first piston rod extends from the piston cylinder, and the second piston rod retracts into the piston cylinder by the amount of the extension of the first piston rod. On the other hand, when the steering is turned in the other direction, the second piston rod extends from the piston cylinder, and the first piston rod retracts into the piston cylinder by the amount of the extension of the second piston rod.

Accordingly, the entire length of the steering damper including the piston cylinder and the first and second piston rods can be held at a fixed length, whichever direction the steering is turned, thus preventing the piston rod from projecting greatly from the under bracket, unlike the conventional art. Thus the interference between the first and second piston rods and the vehicle components around the steering damper can be prevented.

The piston cylinder and the first and second piston rods of the steering damper can extend in a straight line between the first and second brackets. This arrangement can eliminate the need for pressing the steering damper as in the conventional art.

In an embodiment of the invention the steering shaft can be mounted substantially at the center of the under bracket; a pair of front forks can be mounted to both ends of the under bracket with the steering shaft therebetween; and the first piston rod and the second piston rod can be mounted to the under bracket at the same vehicle width as the pair of front forks. With this arrangement, even if the steering angle is at the maximum, the interference between the steering damper and the vehicle components around the steering damper can be prevented.

In an embodiment of the invention, the steering damper can be disposed on the back of the under bracket. With this arrangement, the steering damper can be disposed in the space on the back of the under bracket, facilitating the layout design of the steering damper.

According to an embodiment of the invention, the steering damper can be disposed in parallel with the length of the under bracket, which can be generally elongate. With this arrangement, the steering damper can be disposed compactly in the space around the under bracket, further facilitating the layout design of the steering damper. Moreover, the right and left steering loads can be balanced when the steering is turned.

The arrangement of the straddle-type vehicle and the steering damper for use in the same according to the invention can prevent one end of the piston rod from projecting greatly from the under bracket, unlike the conventional steering damper, and facilitates the layout design of the various vehicle components around the steering damper, and moreover, eliminates the need for pressing the steering damper, thereby reducing the man-hour and manufacturing cost of the steering damper.

### BRIEF DESCRIPTION OF THE DRAWINGS

An example embodiment of the invention is described in the following with reference to the accompany drawings in which
Fig. 1 is a side view of a motorcycle according to an embodiment of the invention;
Fig. 2 is an enlarged diagram of a front pipe, a head pipe, a steering damper and so on;
Fig. 3 is a plan view of the under bracket and the steering damper, as viewed from arrow III-III in Fig. 2; and
Fig. 4 is a plan view of the same as Fig. 3, in which the steering is turned.

### DETAILED DESCRIPTION

An embodiment of the present invention is described in detail below on the basis of an example of a straddle-type vehicle in the form of a motorcycle.

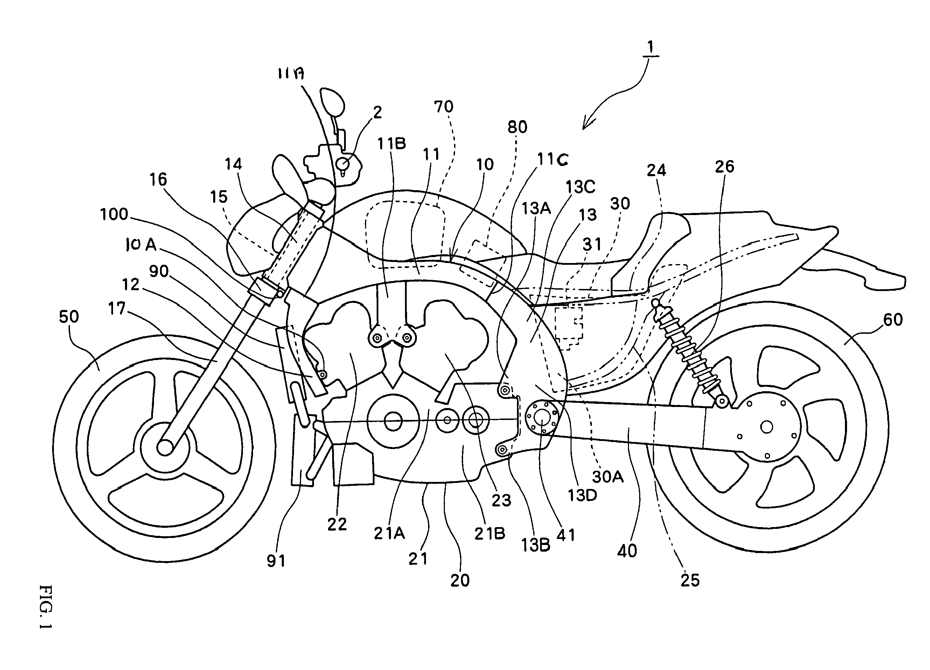

A motorcycle 1 according to an embodiment of the invention includes right and left main pipes (or tubes) 10 (only one is shown), an engine 20, and a steering damper 100, as shown in Figs. 1 to 3.

The main pipes 10 serve as the frame of the vehicle. The main pipes 10 each includes an intermediate pipe 11 extending substantially horizontally in the front-back direction above an engine 20, a front pipe 12 welded at the upper end to the front end 11A of the intermediate pipe 11 and extending from the front end 11A downward in front of the engine 20, and a rear pipe 13 welded at the upper end to the rear end 11C of the intermediate pipe 11 and extending from the rear end downward on the back of the engine 20. A damper mounting frame 12A projects from the front end lower part of the front pipe 12, to which the steering damper 100 is mounted through a link 105, to be described later. The front end 11A of the intermediate pipe 11 is located toward the front of engine brackets 13A and 13B of the rear pipe 13, to be described later.

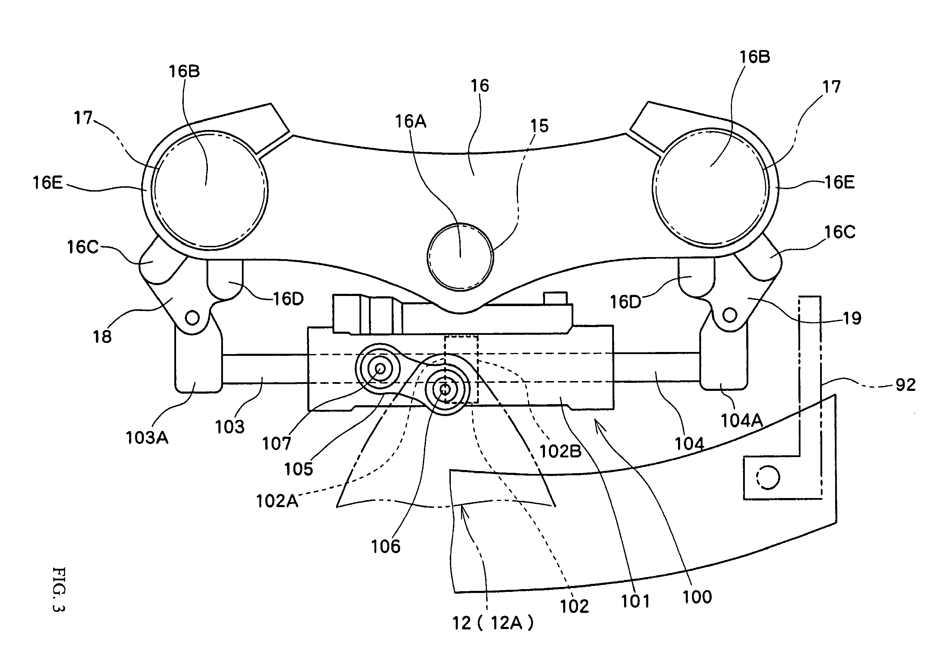

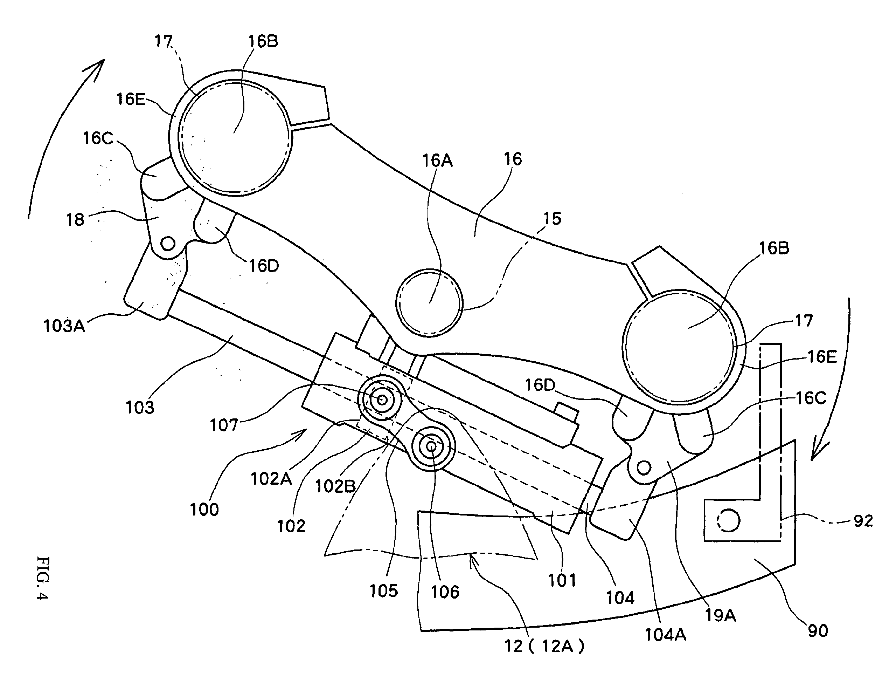

An engine bracket 10A projects from the lower end of the front pipe 12. The engine bracket 10A fixes a front cylinder 22 of the engine 20, to be described later. The front pipe 12 is welded to right and left radiator brackets 92 (only one is shown), as indicated by the chain double-dashed lines of Figs. 3 and 4, to which an upper radiator 90, to be described later, is mounted. An engine bracket 11B is disposed in the middle of the length of the intermediate pipe 11. The engine bracket 11B extends from the intermediate pipe 11 downward toward between the front cylinder 22 and a rear cylinder 23 of the engine 20. The lower end of the engine bracket 11B is forked. The front cylinder 22 and the rear cylinder 23 of the engine 20 are fixed to the lower end of the engine bracket 11B.

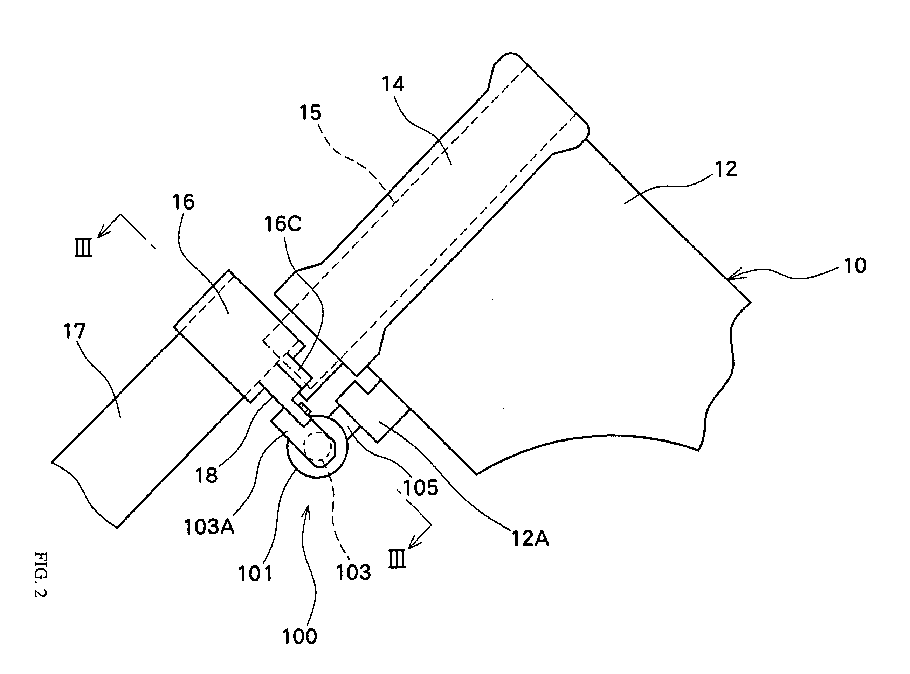

The rear pipe 13 at the rear of the main pipe 10, as shown in Figs. 1 and 2, extends downward from the rear end of the intermediate pipe 11 toward the back of a pivot shaft 41, to be described later, in the form of an arc. The rear pipe 13 has the upper engine bracket 13A and the lower engine bracket 13B projecting from the lower end apart from each other. The upper engine bracket 13A and the lower engine bracket 13B are fitted with an upper case 21A and a lower case 21B of the engine 20, to be described later, respectively. The rear pipe 13 is disposed in such a manner as to overlap with the front part 30A of a fuel tank 30 at the rear of the engine 20 in side view. The upper part 13C of the rear pipe 13 is narrow in side view, while the lower part is wide in side view.

The lower part 13D of the rear pipe 13 is pivotally connected to the front end of a swing arm 40 with the pivot shaft 41. The rear end of the swing arm 40 is rotatably connected to the steering shaft of a rear wheel 60.

The main pipe 10 is bolted to a seat rail 24 extending rearward from the upper part 13C of the rear pipe 13. The lower part 13D of the rear pipe 13 is bolted to a backstay 25 extending to the obliquely upper rear in a curve. The upper end of the backstay 25 is bolted to the middle of the seat rail 24. A shock absorber 26 is provided between the upper end of the backstay 25 and the rear end of the swing arm 40.

A head pipe 14 is welded to the front end of the intermediate pipe 11 of the main pipe 10. The head pipe 14 is rotatably fitted on a steering shaft 15 disposed to a handle 2. The steering shaft 15 is fitted at the lower end with an under bracket 16. The steering shaft 15 is supported in the head pipe 14 constituting part of the frame. The head pipe 14 is fitted at the lower end with the under bracket 16.

Referring to Fig. 3, the under bracket 16 is made of a substantially oblong plate extending in the lateral direction. The under bracket 16 has a steering-shaft insertion hole 16A in the middle in the longitudinal direction (substantially in the center). In the steering-shaft insertion hole 16A, the lower end of the steering shaft 15 is inserted and fixed. The under bracket 16 has front-fork insertion holes 16B and 16B at the opposite ends in the longitudinal direction. In the front-fork insertion holes 16B and 16B, the upper ends of right and left front forks 17 are inserted and fixed. In other words, a pair of the front forks 17 is mounted to the opposite ends of the under bracket 16 with the steering shaft 15 therebetween. The lower ends of the front forks 17 are rotatably connected to a front wheel 50. The under bracket 16 has left support plates 16C and 16D and right supports plates 16C and 16D projecting from both sides. The left support plates 16C and 16D hold a first bracket 18, and the right supports plates 16C and 16D hold a second bracket 19.

The steering damper 100 includes a piston cylinder 101, a piston 102, a first piston rod 103, a second piston rod 104, and a link 105. As shown in Fig. 3, the steering damper 100 is located on the back of the under bracket 16 and substantially in parallel with the length of the under bracket 16.

The piston cylinder 101 is in the form of a cylinder extending axially in a straight line and filled with liquid oil. The piston 102 is shaped like a disk and is slidably disposed in the piston cylinder 101. The piston 102 has an orifice (not shown), through which the liquid oil circulates when the piston 102 slides axially in the piston cylinder 101, thereby causing attenuation. Referring to Fig. 3, the left end face of the piston 102 is indicated by numeral 102A, and the right end face is indicated by numeral 102B.

The first piston rod 103 is in the form of a column extending axially in a straight line, whose trailing end is secured to the end face 102A of the piston 102. The leading end of the first piston rod 103 extends axially in the piston cylinder 101 to project to the outside of the piston cylinder 101, to which a damper mounting portion 103A is fixed. The damper mounting portion 103A is bolded to the first bracket 18.

The second piston rod 104 is also in the form of a column extending axially in a straight line, whose trailing end is secured to the end face 102B of the piston 102. The leading end of the second piston rod 104 extends axially in the piston cylinder 101 to project to the outside of the piston cylinder 101, to which a damper mounting portion 104A is fixed. The damper mounting portion 104A is bolded to the second bracket 19. The projections of the first piston rod 103 and the second piston rod 104 are in a line (e.g., in line, or co-linear). As shown in Fig. 3, the first piston rod 103 and the second piston rod 104 are mounted to the under bracket 16 with the first and second brackets 18 and 19, respectively, at the same vehicle width as the pair of front forks 17.

As shown in Fig. 3, the link 105 is a substantially oblong plate that is narrow in the middle of the length. A longitudinal end of the link 105 is rotatably joined to the damper mounting frame 12A projecting from the front pipe 12 with a pin 106. The other longitudinal end of the link 105 is rotatably joined to the piston cylinder 101 with a pin 107.

The engine 20 is what is called a V-four-cylinder engine. The engine 20 includes a crankcase 21 divided into upper and lower two sections, the upper case 21A and the lower case 21B; the right and left front cylinders 22 (only one is shown) extending from the upper front of the upper case 21A to the obliquely upper front; and right and left rear cylinders 23 located on the back of the front cylinder 22 and extending from the top of the upper case 21A to the obliquely upper rear. The engine 20 is suspended from the main pipes 10 with the engine bracket 10A, 11B, 13A, and 13B.

A pump 31 for supplying fuel to the engine 20 is disposed at the front of the fuel tank 30 and in the vicinity of the rear pipe 13 of the main pipe 10. An air cleaner 70 is disposed on the intermediate pipe 11 of the main pipe 10. A battery 80 is disposed on the intermediate pipe 11 and between the air cleaner 70 and the fuel tank 30. The upper radiator 90 and the lower radiator 91 are disposed between the engine 20 and the front wheel 50. The upper radiator 90 is fixed to the radiator bracket 92 and so on welded to the front pipe 12 of the main pipe 10, while the lower radiator 91 is secured to the crankcase 21 of the engine 20.

When the motorcycle 1 according to the embodiment is steered clockwise, e.g., along the arrow in Fig. 4, around the steering shaft 15, the steering damper 100 is inclined into parallel with the under bracket 16 through the link 105, while the first piston rod 103 extends from the piston cylinder 101. The second piston rod 104 is retracted into the piston cylinder 101 by an amount corresponding to the extension of the first piston rod 103.

When the motorcycle 1 is steered counterclockwise ((not shown) about the steering shaft 15, the steering damper 100 is inclined into parallel with the under bracket 16 through the link 105, while the second piston rod 104 extends from the piston cylinder 101. The first piston rod 103 is retracted into the piston cylinder 101 by an amount corresponding to the extension of the second piston rod 104.

The embodiment is constructed such that the projection of the first piston rod 103 and the projection of the second piston rod 104 are in a line. Accordingly, the entire length of the steering damper 100 including the piston cylinder 101 and the first and second piston rods 103 and 104 can be held at a fixed length whichever direction of clockwise and counterclockwise the steering is turned. This prevents the piston rod from projecting greatly from the under bracket, unlike the conventional art, thereby to prevent the interference between the first and second piston rods 103 and 104 and the various vehicle components around the steering damper 100, thus facilitating the layout design of the components.

The embodiment is constructed such that the piston cylinder 101 of the steering damper 100 and the first and second piston rods 103 and 104 extend in a straight line between the first and second brackets 18 and 19. This eliminates the need for pressing the steering damper 100 as in the conventional art, thereby reducing the man-hours and cost of manufacturing the steering damper 100.

Furthermore, the first and second piston rods 103 and 104 are mounted to the under bracket 16 at the same vehicle width as the pair of front forks 17. Accordingly, even if the steering damper 100 is greatly turned as shown in Fig. 4, the interference between an end 16E of the under bracket 16 and the radiator bracket 92 in the vicinity thereof is prevented, thus preventing damage on the under bracket 16.

The embodiment is constructed such that the rear pipe 13 at the rear of the main pipe 10 is curved into an arc shape. This prevents the load of the engine from being concentrated locally on the bent portion of the main pipe when the rear pipe 13 of the main pipes 10 is joined to the crankcase 21 of the engine 20, thus allowing the load of the engine 20 to be evenly applied to the entire main pipe 10 to thereby increase the rigidity of the main pipe.

The rear pipe 13 is joined to the crankcase 21 of the engine 20 via the back of the pivot shaft 41. Accordingly, the load of the engine 20 transmitted to the rear of the main pipe 10 can be surely received by the rear pipe 13 in comparison with the case in which the rear pipe extends from the rear end of the front pipe substantially vertically downward in a straight line to be joined to the crankcase of the engine as in the conventional art. This also increases the rigidity of the main pipe 10, improving the performance and reliability of the motorcycle 1.

To facilitate the layout design of vehicle components around a steering damper and to reduce the cost of manufacturing the steering damper and so on, there has been described a steering damper that includes a piston cylinder extending axially in a straight line; a piston slidably disposed in the piston cylinder; a first piston rod extending in a straight line from one end face of the piston; and a second piston rod 104 extending in a straight line from the other end face of the piston. The leading ends of the first and second piston rods can be mounted to first and second brackets, respectively, of an under bracket (steering bracket). The piston cylinder and a damper mounting frame can be joined together with a link.

There has been described a saddle-type vehicle comprising: a body frame; an under bracket mounted to a steering shaft supported by the body frame; and a steering damper that causes attenuation during steering; wherein the steering damper comprises: a piston cylinder mounted to the body frame; a piston slidably disposed in the piston cylinder and causing attenuation during sliding in the piston cylinder; a first piston rod projecting from one end face of the piston to the outside of the piston cylinder, the projecting end being fixed to an longitudinal end of the under bracket of the body; and a second piston rod projecting from the other end face of the piston to the outside of the piston cylinder, the projecting end being fixed to the other longitudinal end of the under bracket of the body; wherein the projection of the first piston rod and the projection of the second piston rod are in a line.

There has also been described a steering damper for use in a saddle-type vehicle, the steering damper comprising: a piston cylinder mounted to the body frame with a link; a piston slidably disposed in the piston cylinder and causing attenuation during sliding in the piston cylinder; a first piston rod projecting from one end face of the piston to the outside of the piston cylinder, the projecting end being fixed to an longitudinal end of the under bracket with a first bracket; and a second piston rod projecting from the other end face of the piston to the outside of the piston cylinder, the projecting end being fixed to the other longitudinal end of the under bracket with a second bracket; wherein the projection of the first piston rod and the projection of the second piston rod are in a line.

The invention has been described using the motorcycle 1 as an example of the straddle-type vehicle. However, the invention is not limited to that, but may be applied to other straddle-type vehicles such as motor three wheelers and buggies.

### DESCRIPTION OF REFERENCE NUMERALS:

1: motorcycle (straddle-type vehicle)
10: main pipe or main tube (frame)
16: steering bracket (under bracket)
18: first bracket
19: second bracket
100: steering damper
101: piston cylinder
102: piston
103: first piston rod
104: second piston rod
105: link

## Claims

1. A steering damper for a straddle-type vehicle, the steering damper comprising:
a piston cylinder mountable to the body frame of the vehicle;
a piston slidably disposed in the piston cylinder and causing attenuation during sliding in the piston cylinder;
a first piston rod projecting from one end face of the piston to the outside of the piston cylinder, the projecting end being connectable to a first longitudinal end of a steering bracket of the vehicle; and
a second piston rod projecting from the other end face of the piston to the outside of the piston cylinder, the projecting end being connectable to the other longitudinal end of the steering bracket; wherein
the projection of the first piston rod and the projection of the second piston rod are in-line.

2. The steering damper according to claim 1, wherein the piston cylinder is mountable to the body frame of the vehicle via a link.

3. The steering damper according to claim 1 or claim 2, wherein the projecting end of each piston rod is connectable to a respective longitudinal end of the steering bracket via a respective bracket.

4. A straddle-type vehicle comprising:
a body frame;
a steering bracket mounted to a steering shaft supported by the body frame; and
a steering damper according to any preceding claim that causes attenuation during steering; wherein
the piston cylinder is mounted to the body frame;
the first piston rod is connected to the first longitudinal end of the steering bracket;
the second piston rod is connected to the other longitudinal end of the steering bracket; and
the projection of the first piston rod and the projection of the second piston rod are in-line.

5. The straddle-type vehicle according to Claim 4, wherein the steering bracket is an under bracket located at a lower end of a steering shaft.

6. The straddle-type vehicle according to Claim 5, wherein the steering shaft is mounted to substantially the center of the under bracket; a respective one of a pair of front forks is mounted to each end of the under bracket with the steering shaft therebetween; and the first piston rod and the second piston rod are connected to the under bracket at the same vehicle width as the pair of front forks.

7. The straddle-type vehicle according to claim 6 or claim 6, wherein the steering damper is disposed at the back of the under bracket.

8. The straddle-type vehicle according to any one of Claims 4 to 7, wherein the under bracket is elongate and the steering damper disposed parallel with the length of the under bracket.

9. The straddle-type vehicle according to any one of Claims 4 to 8, wherein the piston cylinder is mounted to the body frame of the vehicle via a link.

10. The straddle-type vehicle according to any one of Claims 4 to 9, wherein the projecting end of each piston rod is connected to a respective longitudinal end of the steering bracket via a respective bracket.
